Europäisches Patentamt

(19) European Patent Office

Office européen des brevets

(11) Publication number: **0 098 334**
A1

(12) # EUROPEAN PATENT APPLICATION

(21) Application number: **82200897.5**

(22) Date of filing: **14.07.82**

(51) Int. Cl.³: **F 02 C 6/14**
// F02C1/02

(43) Date of publication of application: **18.01.84**
**Bulletin 84/3**

(84) Designated Contracting States: **DE FR GB**

(71) Applicant: **B.V. Neratoom, Laan van Nieuw Oost
Indie 129-135, NL-2593 BM 's-Gravenhage (NL)**

(72) Inventor: **Hirs, Gilles Gerardus, Rembrandtlaan 92,
NL-3723 BV Bilthoven (NL)**

(74) Representative: **Urbanus, Henricus Maria, Ir. et al, c/o
Vereenigde Octrooibureaux Nieuwe Parklaan 107,
NL-2587 BP 's-Gravenhage (NL)**

(54) A method of using stored mechanical energy.

(57) A method of storing mechanical energy and the use
thereof, in which in certain periods at least a part of a gas
contained in a natural gas basin is withdrawn therefrom via
an expansion turbine and in other given periods a fluid
present in a natural gas pipeline system or other reservoir
is supplied to the natural gas basin coupled or to be coupled
therewith in a mechanical manner via a compressor or
pump.

EP 0 098 334 A1

A method of using stored mechanical energy.

The invention relates to the storage of mechanical energy and the use of said stored energy whenever this is needed.

It is generally known that the storage of mechanical energy is possible in a comparatively simple manner in regions having substantial, natural differences in level; the energy can be stored here for instance by installing water basins at high and low levels, thus releasing energy when water flows from the upper water basin to the lower basin. The storage of the mechanical energy is effected by pumping the water from the lower basin to the upper basin.

It will be clear that such a method is attractive for regions wherein, as stated in the above, substantial natural level differences prevail.

These level differences can naturally also be created artifically. For instance, already in the early thirties it was proposed to use a valley, such as a part of the Geul valley in the Netherlands, as water storage basin with a drop height of more than 100 meters. This proposal was never realised in connection with the inherent substantial cost.

A different idea is the one wherein a dike-surrounded region, such as the Markerwaard polder, is used as storage basin. The drawback thereof is that only a drop height of about 15 - 30 m can be achieved and this entails particularly high cost for its use.

A different suggestion is that which is entitled "underground pump accumulation station" (UPAS), wherein above-ground and underground basins are present. The underground basin is to be installed in large depth rock in the form of tunnels lined with reinforced concrete. This method excludes the above drawback of the slight drop height. However, it is questionable whether the construction of such underground basins will not be abandoned owing to the inherent hight cost.

It is an object of the invention to provide a storage of mechanical energy at minimal investment and minimal energy loss per unit of stored energy during a given period of time, and to thereby utilize the thus stored mechanical energy in a particularly effective manner.

To this effect according to the invention in certain periods at least a part of a gas present in a natural gas basin is drawn therefrom over an expansion turbine and in other given periods a fluid present in a natural gas pipeline system or different reservoir is supplied to the natural gas basin coupled or to be coupled therewith over a compressor.

When this procedure is followed, there are achieved a number of advantages. In the first place, a slight investment is possible, in that use is made of underground basins, which are to be found e.g. in the Netherlands in the form of natural gas basins. For creating such basins no once-only investment is necessary; these basins are or become available entirely free. However, a method should be found which optimally maintains the storage volume of the basin (e.g. in the form of porous rock).

In the second place, at present the pressure of the natural gas in a natural gas basin, which pressure is 100 bars or more, is throttled away, which means that the mechanical energy contained in the natural gas is not utilized. When, however, according to the invention, the natural gas is tapped by expansion of the natural gas of more than 100 bars to some tens of bars in an expansion turbine, there is achieved a pure energy gain as compared with the present situation. Besides this gain, this method of producing electricity has the additional advantage that since the maxima and minima in the demand for natural gas and electricity on an average are synchronous, these expansion turbines may have a useful function in balancing fluctuations in the demand for electricity.

With the very large natural gas basins already in use, which have a volume of over $10^{11}$ m³, energy storage is directly possible by using the natural gas basin in periods wherein no natural gas consumption peak occurs, as high pressure storage space and the natural gas pipeline system, possibly in combination with a buffer system, as low pressure storage system. As a result of pressure fluctuations in the pipeline system and possibly by application of a throttling installation, it is possible with natural gas expansion turbines to meet a fluctuating electricity demand within broad limits. In this case, it is assumed that there is always a demand for natural gas and no natural gas need be pumped back to the basin.

However, it is also possible to use the energy storage in

-4-

the smaller gas basins present inter alia in the Netherlands, having a volume of less than $10^{10}$ m³. At a pressure of 100 bars, the mechanical energy capacity is about $10^{15}$ joules, which corresponds with $2.5 \times 10^5$ MWh.

At pressure variations of 10% and a storage loss of 20%, an energy storage/take-off of $2.10^4$ MWh per cycle is deemed possible.

The method according to the invention, as described in the above, can be realised in a number of different manners. For instance, according to the invention in certain periods at least a part of the natural gas from a natural gas basin can be supplied to a natural gas pipeline system coupled therewith via the abovementioned expansion turbine, while in other given periods at least a part of the natural gas present in the natural gas pipeline system, is returned via the above compressor to the natural gas basin. In this manner it is possible in case of an electricity excess, to pump natural gas from the pipeline system to the basin and in case of electricity demand, to proceed to the reverse.

Another realization is the one in which according to the invention in certain periods at least a part of the natural gas from a natural gas basin is supplied to the natural gas pipeline system coupled therewith via the said expansion turbine and during and/or after this period, another scrubbable gas is supplied via the said compressor to the natural gas basin. Essentially this means that the natural gas basin discharges only natural gas to the pipeline system. During said discharge,

-5-

an increased demand for electricity can then be met. In case of electricity excess no natural gas is pumped back, as in the above considered case, but a scrubbable, other gas so as to maintain the pressure in the basin.

It is clear that in the first described embodiment both in case of storage and of take-off, an interference with the natural gas pipeline system takes place. In the subsequently described system interference with the pipeline system takes place only in case of take-off.

However, it is conceivable that any interference with the natural gas pipeline system is deemed technically unacceptable.

In that case, it is desirable to destine one of the above smaller natural gas basins for the storage of mechanical energy. In that case according to the invention all natural gas from the respective natural gas basins can be supplied to a natural gas pipeline system coupled therewith via the said expansion turbine, after which the substantially empty natural gas basin is filled with a different fluid via the said compressor.

For filling purposes according to the invention the fluid may consist of a gas and water. However, it is also possible that the fluid only consists of a gas, such as $CO_2$. Furthermore according to the invention it is possible that the gas consists of air.

A different solution is the one in which the substantially empty natural gas basin is filled first with $CO_2$ and subsequently the $CO_2$ is replaced by air.

The advantage of air is that in comparison with $CO_2$ it leads to a more inexpensive system and moreover that it can be burned in the said expansion turbine. When, as mentioned in the above, also water is employed, the respective turbine can be water-driven and the water can be pumped back to the bottom of the basin, so that the basin then functions as air receiver under which water can be pumped in and out. The compression of the likewise present gas then takes place isothermally, so with a maximum yield.

It is furthermore observed that a replacement of the natural gas flowing out of the basin by a different fluid moreover leads to a favourable conditioning of the basin .

Summarizing, it is observed that it is consequently possible according to the invention to store mechanical energy in the form of a fluid, such as compressed gas with as advantages that a minimal quantity of space is necessary therefor, a minimal investment is possible for the storage system, while the storage and take-off is possible both during short and long periods, for instance daily or per season.

Finally, an additional advantage of the use of a natural gas basin for the energy storage is pointed out, viz. the economic residual value after use of the natural gas; consequently it is more in particular attractive in view thereof to also exploit a number of smaller gas basins.

-7-

CLAIMS

1. A method of storing mechanical energy and the use thereof, characterized in that in certain periods at least a part of a gas contained in a natural gas basin is withdrawn therefrom via an expansion turbine and in other given periods a fluid present in a natural gas pipeline system or other reservoir is supplied to the natural gas basin coupled or to be coupled therewith in a mechanical manner via a compressor or pump.

2. A method according to claim 1, characterized in that in certain periods at least a part of the natural gas contained in a natural gas basin is supplied to a natural gas pipeline system coupled therewith via the said expansion turbine and in other given periods at least a part of the natural gas contained in the natural gas pipeline system is returned to the natural gas basin in a mechanical manner.

3. A method according to claim 1, characterized in that in certain periods at least a part of the natural gas present in a natural gas basin is supplied to a natural gas pipeline system coupled therewith via the said expansion turbine and after these periods a scrubbable, different gas is supplied to the natural gas basin via a compressor.

4. A method according to claim 1, characterized in that all natural gas from a natural gas basin is supplied to a natural gas pipeline system coupled therewith via the said expansion turbine and the substantially empty natural gas basin is subsequently filled via the said compressor with a different

0C98334

-8-

fluid.

5. A method according to claims 1 and 4, characterized in that the other fluid comprises gas and water.

6. A method according to claims 1 and 4, characterized in that the other fluid consists of $CO_2$.

7. A method according to claims 1 and 4, characterized in that the other fluid consists of air.

8. A method according to claim 3, characterized in that the natural gas basin is filled first with $CO_2$ and subsequently the $CO_2$ is replaced by air.

0098334

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl. ³) |
| A | BRENNSTOFF-WÄRME-KRAFT, vol. 30, no. 9, September 1978, pages 365-366, Stuttgart, DE. J. WENZEL: "Kraftwerk mit einer Druckentspannungs-Turbine in einem druckführenden Leitungssystem" | | |
| A | US-A-4 043 126 (SANTOS) | | |

TECHNICAL FIELDS SEARCHED (Int. Cl. ³)

The present search report has been drawn up for all claims

| Place of search THE HAGUE | Date of completion of the search 20-10-1982 | Examiner IVERUS D. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

**European Patent Office**

**EUROPEAN SEARCH REPORT**

Application number

EP 82 20 0897

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | BRENNSTOFF-WÄRME-KRAFT, vol. 33, no. 12, December 1981, page 494, Würzburg, DE. K.H. LEE et al.: "Luftströmung und Luftverteilung in unterirdischen porösen Speichern verbunden mit Kompressoren und Turbinen eines Kraftwerkes" | 1,3-6 | F 02 C 6/14 // F 02 C 1/02 |
| A | DE-C- 940 683 (DJORDJEVITCH) * Whole document * & NL - C - 84772 | 1,4,7 | |
| A | US-A-2 433 896 (GAY) * Column 1, lines 1-25 * | 1,2 | |
| A | BROWN BOVERI REVIEW, vol. 67, no. 12, December 1980, pages 723-733, Baden, CH. P. ZAUGG et al.: "Air-storage power plants with special consideration of USA conditions" * Page 725, left-hand column, last paragraph * | 1,3,4 | TECHNICAL FIELDS SEARCHED (Int. Cl. ³) F 02 C F 01 D |
| A | US-A-4 220 009 (WENZEL) | | |
| A | WORLD OIL, vol. 181, no. 2, August 1975, pages 29-31, Houston, USA "Differential gas pressure drives 50-watt generator" | | |

-/-

The present search report has been drawn up for all claims

| Place of search | Date of completion of the search | Examiner |
|---|---|---|
| THE HAGUE | 20-10-1982 | IVERUS D. |